# EUROPEAN PATENT SPECIFICATION

(11) **EP 3 109 101 B1**
(45) Date of publication and mention of the grant of the patent: **23.10.2019**
(21) Application number: 14882824.7
(22) Date of filing: 20.02.2014
(51) Int. Cl.: B60R 22/34, B60R 22/10

(54) **SEATBELT REEL-IN DEVICE**
SICHERHEITSGURTAUFROLLVORRICHTUNG
DISPOSITIF D'ENROULEMENT DE CEINTURE DE SÉCURITÉ

(43) Date of publication of application: 28.12.2016
(73) Proprietor: OGK Co. Ltd., Higashi-Osaka-shi, Osaka 577-0066 (JP)
(72) Inventor: HASEGAWA Shingo, Higashi-Osaka-shi Osaka 577-0066 (JP)
(74) Representative: Lemcke, Brommer & Partner Patentanwälte Partnerschaft mbB
(86) International application number: PCT/JP2014/054080
(87) International publication number: WO 2015/125257

(56) References cited:
- JP-A- 2000 127 894
- JP-A- 2000 127 894
- JP-A- 2001 277 918
- JP-A- 2010 254 095

## Description

### Technical Field

The present invention relates to a seatbelt reel-in device capable of freely reeling and unreeling a seatbelt for restraining a small child sitting in a child seat.

### Background Art

As a seatbelt reel-in device which is set in a seat for small children, such as a child seat for bicycle which is attached to a bicycle and a child seat which is attached to an automobile seat, there is one comprising a reel-in rotating body for freely reeling and unreeling a seatbelt for restraining a child sitting in a child seat, in which the reel-in rotating body is urged in a direction to reel the seatbelt by a reel-in spring, so that the seatbelt presents no obstacle.

As a conventional seatbelt reel-in device of this type, there is one comprising a rotation lock mechanism for disabling the rotation of a reel-in rotating body, and a lock operation tool for switching the rotation lock mechanism back and forth between a locking state and an unlocking state. In this construction, by setting the rotation lock mechanism in the locking state by lock operation tool-rotating operation, it is possible to avoid that a seatbelt is inadvertently reeled off by some mischief of a child sitting in a child seat, and thereby hold the seatbelt worn by the child properly (refer to Patent Literature 1, for example).

### Prior Art Reference

### Citation List

Patent Literature 1: Japanese Unexamined Patent Publication JP-A 2010-254095

JP 2000 127894 discloses a seat belt reel-in device comprising a reel-in rotating body for freely reeling and unreeling a seat belt for restraining a small child sitting in a child seat, the reel-in rotating body being urged in a direction to reel the seat belt by a reel-in spring; a rotation lock mechanism for disabling rotation of the reel-in rotating body the rotation lock mechanism being capable of switching back and forth between a locking state for disabling rotation of the reel-in rotating body and an unlocking state for permitting rotation of the reel-in rotating body; a lock operation tool for switching the rotation lock mechanism back and forth between the locking state and the unlocking state; an inhibiting mechanism for inhibiting the rotation lock mechanism from switching to the unlocking state, the inhibiting mechanism being capable of switching back and forth between an inhibiting state for inhibiting the rotation lock mechanism from switching to the unlocking state and a permitting state for allowing the rotation lock mechanism to switch to the unlocking state; and an inhibition operation tool for switching the inhibiting mechanism back and forth between the inhibiting state and the permitting state.

### Summary of Invention

### Technical Problem

However, in the conventional case, if the lock operation tool is inadvertently rotated or otherwise to switch the rotation lock mechanism to the unlocking state by some mischief of a child sitting in the child seat, the seatbelt worn by the child may be accidentally reeled off from the reel-in rotating body.

The present invention has been devised in view of the problems as discussed supra, and accordingly an object of the invention is to provide a seatbelt reel-in device capable of avoiding inadvertent operation of a lock operation tool by some mischief of a child sitting in a child seat, and thus preventing a seatbelt worn by the child from being accidentally reeled off from a reel-in rotating body more reliably.

### Solution to Problem

The following describes specific problem-solving means pursuant to the present invention.

According to technical means to solve the technical problems pursuant to the present invention, there is provided a seatbelt device according to claim 1. The seatbelt reel-in device comprising: a reel-in rotating body 30 for freely reeling and unreeling a seatbelt 17 for restraining a small child sitting in a child seat, the reel-in rotating body 30 being urged in a direction to reel the seatbelt 17 by a reel-in spring 34; a rotation lock mechanism 37 for disabling rotation of the reel-in rotating body 30, the rotation lock mechanism 37 being capable of switching back and forth between a locking state for disabling rotation of the reel-in rotating body 30 and an unlocking state for permitting rotation of the reel-in rotating body 30; a lock operation tool 40 for switching the rotation lock mechanism 37 back and forth between the locking state and the unlocking state; an inhibiting mechanism 38 for inhibiting the rotation lock mechanism 37 from switching to the unlocking state, the inhibiting mechanism 38 being capable of switching back and forth between an inhibiting state for inhibiting the rotation lock mechanism 37 from switching to the unlocking state and a permitting state for allowing the rotation lock mechanism 37 to switch to the unlocking state; and an inhibition operation tool 41 for switching the inhibiting mechanism 38 back and forth between the inhibiting state and the permitting state.

Moreover, in another technical means pursuant to the present invention, the rotation lock mechanism 37 comprises a lock gear 43 mounted in the reel-in rotating body 30, a lock pawl 44 which releasably engages with the lock gear 43 to disable rotation of the reel-in rotating body 30, and a lock member 45 for locking the lock pawl 44 in engagement with the lock gear 43. The lock member 45 is free to switch back and forth between a locking state X for locking the lock pawl 44 in engagement with the lock gear 43 and an unlocking state Y for separating the lock pawl 44 from the lock gear 43. The inhibiting mechanism 38 has an inhibiting member 68 for inhibiting the lock member 45 from switching from the locking state X to the unlocking state Y. The inhibiting member 68 is supported so as to be movable between an inhibiting position A to inhibit the lock member 45 from switching to the unlocking state Y and a permitting position B to allow the lock member 45 to switch to the unlocking state Y. Moreover, an inhibiting spring 77 is provided to urge the inhibiting member 68 toward the inhibiting position A, and, the inhibition operation tool 41 is designed to cause the inhibiting member 68 to move to the permitting position B against an urgence of the inhibiting spring 77 by button-pressing operation.

Moreover, in another technical means pursuant to the present invention, the lock member 45 is rotatably supported to assume a locking attitude X1 and an unlocking attitude Y1, and is movably supported to assume an approaching position X2 to move close to the lock gear 43 and a separating position Y2 to move away from the lock gear 43. The lock member 45 is set in the locking state X when rotationally moved into the locking attitude X1 at the approaching position X2, and is set in the unlocking state Y when moved to the separating position Y2 in the unlocking attitude Y1.

Moreover, in another technical means pursuant to the present invention, there are provided retaining portions 63, taken as a pair, positioned one on either side of the lock member 45, which engage with corresponding lengthwise ends of the lock member 45 to restrain the lock member 45 from moving toward the separating position Y2 when the lock member 45 is set in the locking state X. Moreover, a holding recess 64 is situated between the paired retaining portions 63, for holding the lock member 45 therein to restrain the lock member 45 from rotationally moving into the locking attitude X1 when the lock member 45 is set in the unlocking state Y.

Moreover, in another technical means pursuant to the present invention, the inhibiting member 68 is placed in the vicinity of the lock member 45. The inhibiting member 68 in the inhibiting position A is brought into correspondence with the lock member 45 in the locking state X, thus inhibiting the lock member 45 from rotationally moving to change its attitude from the locking attitude X1 to the unlocking attitude Y1, and, the inhibiting member 68 in the permitting position B stays away from the lock member 45 in the locking state X, thus allowing the lock member 45 to rotationally move to change its attitude from the locking attitude X1 to the unlocking attitude Y1.

Moreover, in another technical means pursuant to the present invention, the lock pawl 44, which is situated between the lock member 45 and the lock gear 43, is coupled to the lock member 45 so as to move toward and away from the lock gear 43 in sync with the lock member 45. The lock operation tool 40 is coupled to the lock member 45 for operation of the lock member 45 to enable the lock member 45 to rotationally move into the locking attitude X1 and the unlocking attitude Y1, as well as to move into the approaching position X2 and the separating position Y2.

Moreover, in another technical means pursuant to the present invention, there is provided a lock release spring 66 for urging the lock member 45 in a direction away from the lock gear 43.

Moreover, in another technical means pursuant to the present invention, there is provided a reel-in case 29 in which the reel-in rotating body 30 is rotatably accommodated, and a pawl constituting member 47 including the lock pawl 44 is held for free movement toward the lock gear 43, the reel-in case 29 being formed with the paired retaining portions 63 and the holding recess 64.

Moreover, in another technical means pursuant to the present invention, the lock operation tool 40 is placed on an outer-surface side of the reel-in case 29. The inhibition operation tool 41 is disposed so as to project from the inhibiting member 68, and is inserted in the reel-in case 29 in an outwardly-projecting condition so as for the inhibiting member 68 to be movable between the inhibiting position A and the permitting position B, and, an outwardly-projecting part of the inhibition operation tool 41 constitutes a pushbutton 41a.

Moreover, in another technical means pursuant to the present invention, the seatbelt 17 has a single base belt body 19 at its base end which is wound on the reel-in rotating body 30, and two branchlike belt bodies 20 branched from the base belt body 19 at its front end.

### Advantageous Effects of Invention

According to the present invention, by setting the inhibiting mechanism in the inhibiting state, the rotation lock mechanism cannot be switched to the unlocking state by the operation of the lock operation tool. This makes it possible to avoid that the lock operation tool is inadvertently operated to switch the rotation lock mechanism to the unlocking state by some mischief of a child sitting in the child seat, and thereby prevent the seatbelt worn by the child from being accidentally reeled off from the reel-in rotating body more reliably.

### Brief Description of Drawings

FIG. 1 is a side view, partly in section, of a seatbelt reel-in device in a locking state, with one of its case bodies removed, in accordance with one embodiment of the present invention.
FIG. 2 is a sectional front view of the seatbelt reel-in device in the locking state.
FIG. 3 is a side view, partly in section, of the seatbelt reel-in device in an unlocking state, with one of its case bodies removed.
FIG. 4 is a sectional front view of the seatbelt reel-in device in the unlocking state.
FIG. 5 is a plan view of the seatbelt reel-in device.
FIG. 6 is a side view of the seatbelt reel-in device, with a seatbelt reeled off from it.
FIG. 7 is a side view of a child seat for bicycle fitted with the seatbelt reel-in device.
FIG. 8 is a plan view of a seat main body fitted with the seatbelt reel-in device.
FIG. 9 is a sectional side view of the seat main body fitted with the seatbelt reel-in device.

### Description of Embodiments

Hereinafter, embodiments of the present invention will be described with reference to drawings.

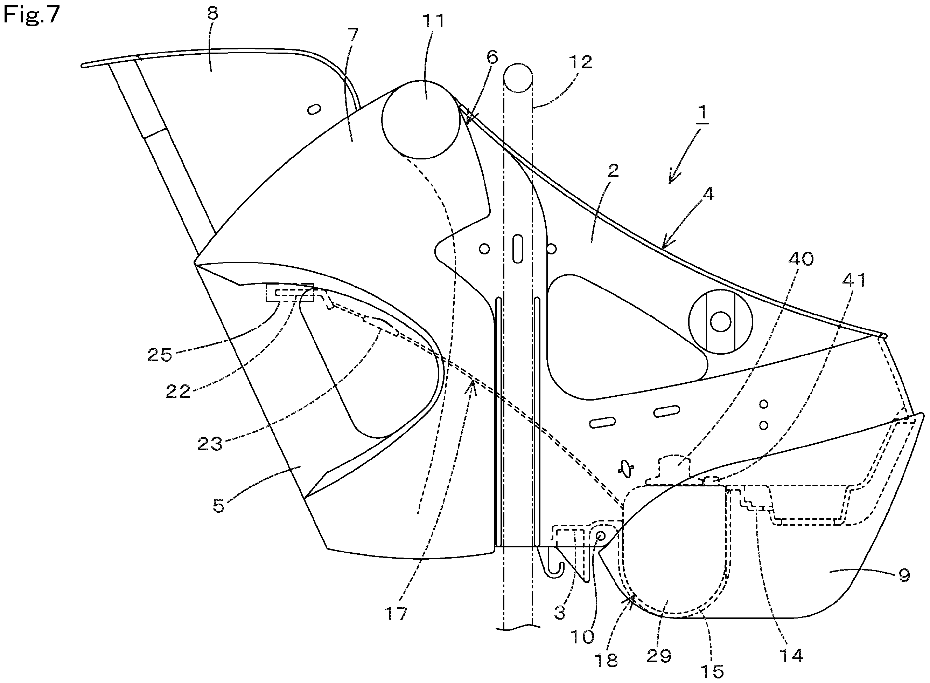

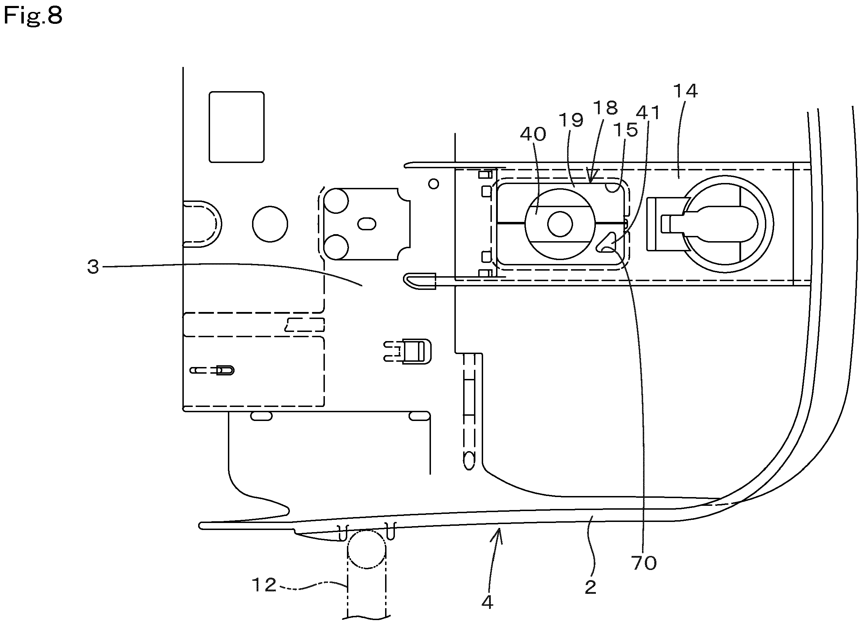

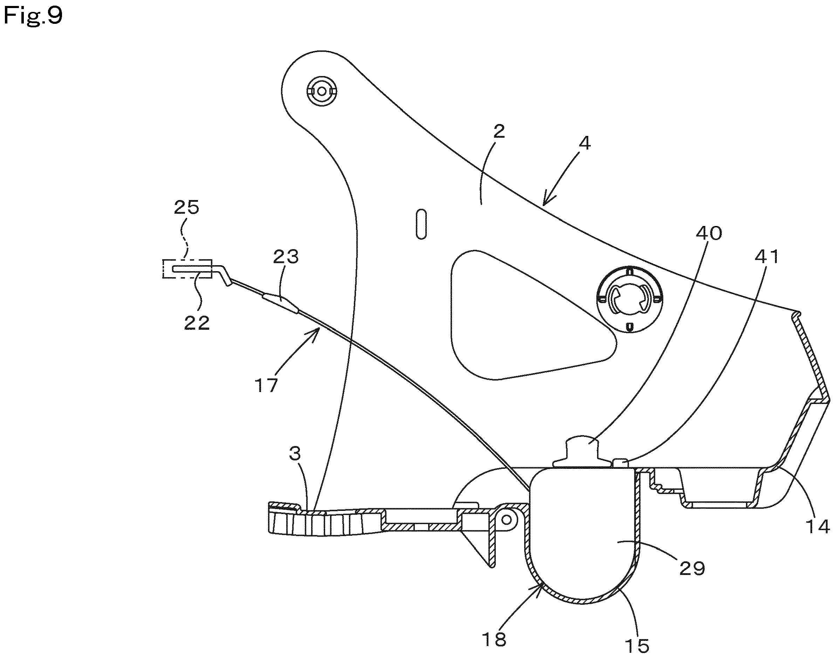

FIGs . 1 to 9 are views showing one embodiment of the present invention. In FIGs. 7 to 9, a child seat for bicycle 1 comprises a seat main body 4 including a pair of right and left body side walls 2 and a seat portion 3, and a backrest body 6 including a pair of right and left backrest side walls 7 and a backrest portion 5, the seat main body 4 and the backrest body 6 being provided independently of each other. The upper side of the backrest body 6 is supported for free rocking motion about a horizontal support shaft 11 relative to the seat main body 4, and, the right and left body side walls 2 and the right and left backrest side walls 7 constitute right and left seat side walls of the child seat for bicycle 1.

An adjustable height headrest 8 is mounted in the backrest portion 5 of the backrest body 6, and, a step 9 is mounted for rocking motion about a lateral axis 10 in the seat main body 4. The child seat for bicycle 1 is detachably attached to a bicycle handle bar 12 to allow a child to sit therein, as well as to serve as a carrying basket.

The seat main body 4, the backrest body 6, the headrest 8, and the step 9 are formed in one piece of synthetic resin.

A partition wall 14 located centrally of the front part of the seat 3 is formed with a downwardly concavely curved housing recess 15 in which is detachably held a seatbelt reel-in device 18 for freely reeling and unreeling a seatbelt 17.

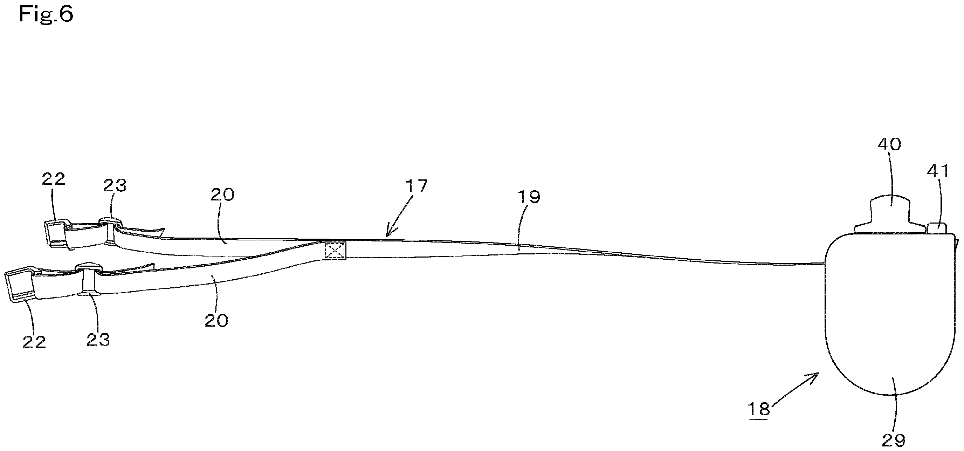

The seatbelt 17 is intended to restrain a child sitting in a child seat. As shown in FIG. 6, the seatbelt 17 has a single base belt body 19 at its base end (reeled-in end), and two branchlike belt bodies 20 branched from the base belt body 19 at its front end.

Each of the two branchlike belt bodies 20 has a connecting tool 22 coupled to its tip, and also has a length adjuster 23 for adjusting the length of the branchlike belt body 20 fitted in a position thereof slightly spaced away from the coupling tool 22 toward the base end. The connecting tools 22 of the branchlike belt bodies 20 are detachably coupled to corresponding connected tools 25 protrudingly formed one on either side of the headrest 8 in a horizontal direction.

For example, the connecting tool 2 of the branchlike belt body 20 is constructed of a male connector member, and the connected tool 25 of the headrest 8 is constructed of a female connector member to which the male connector member is detachably coupled at one touch.

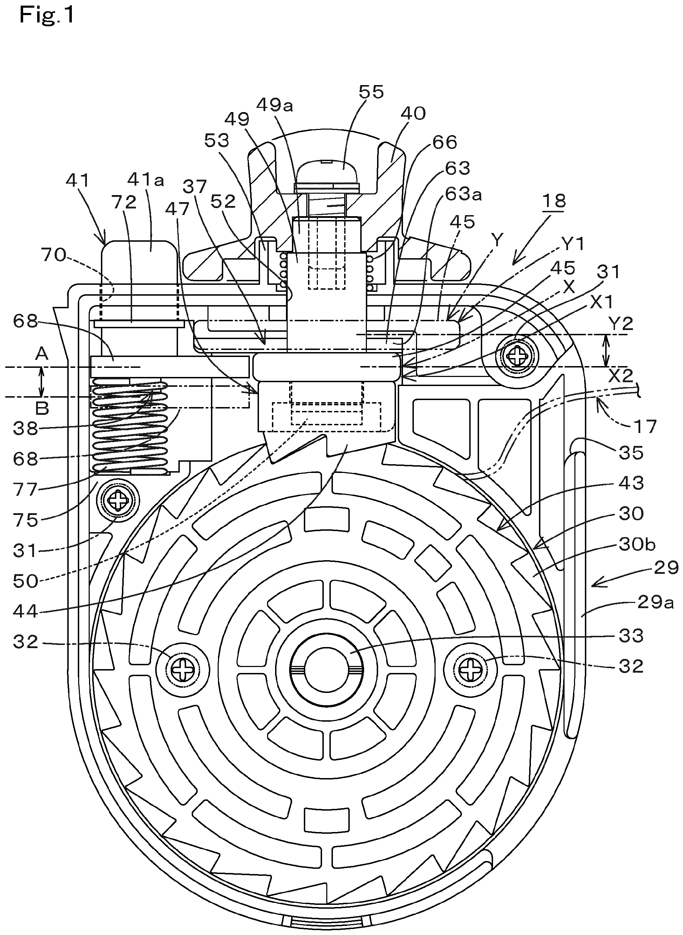

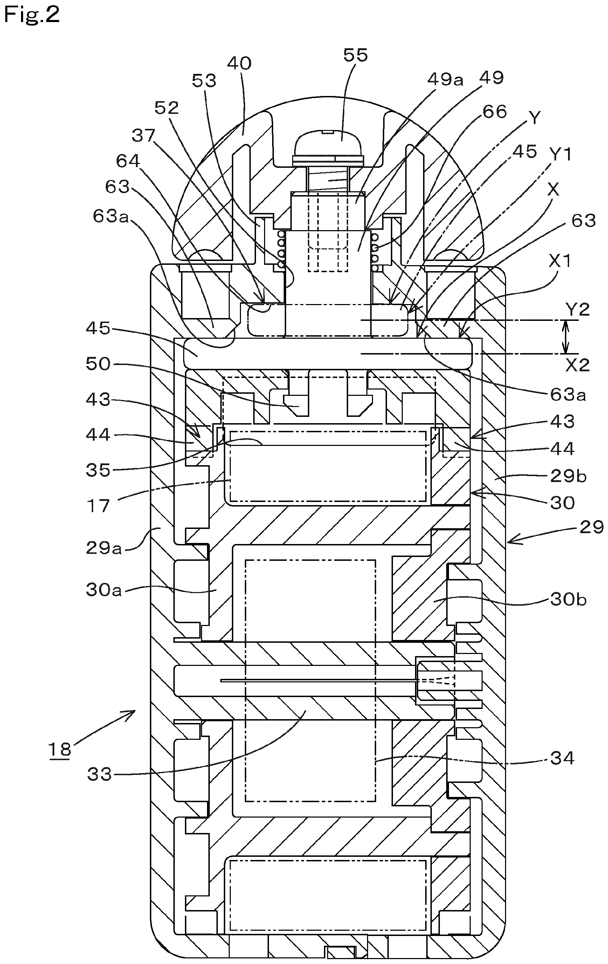

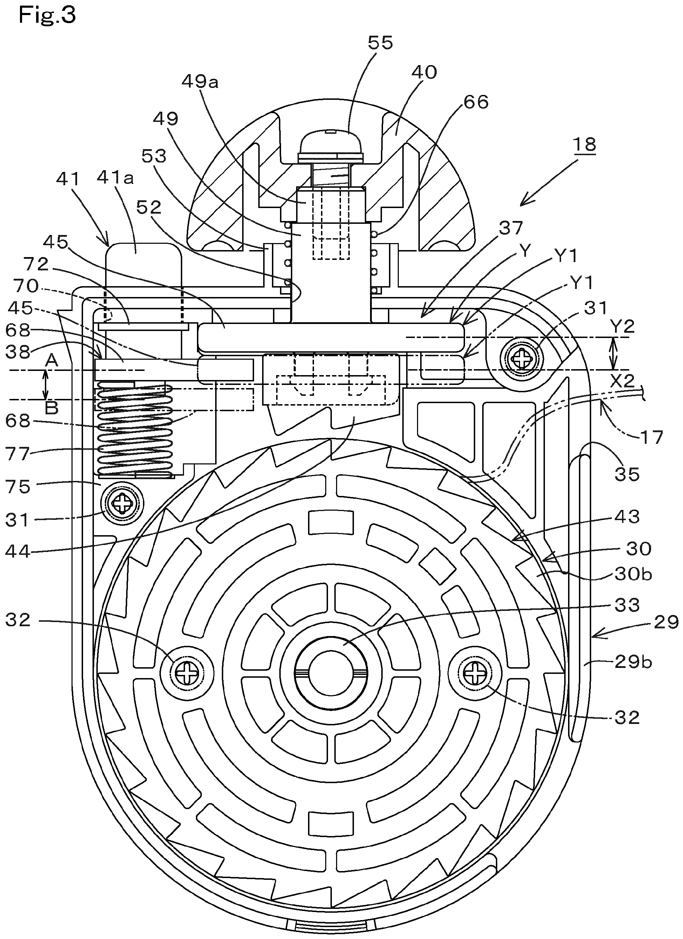

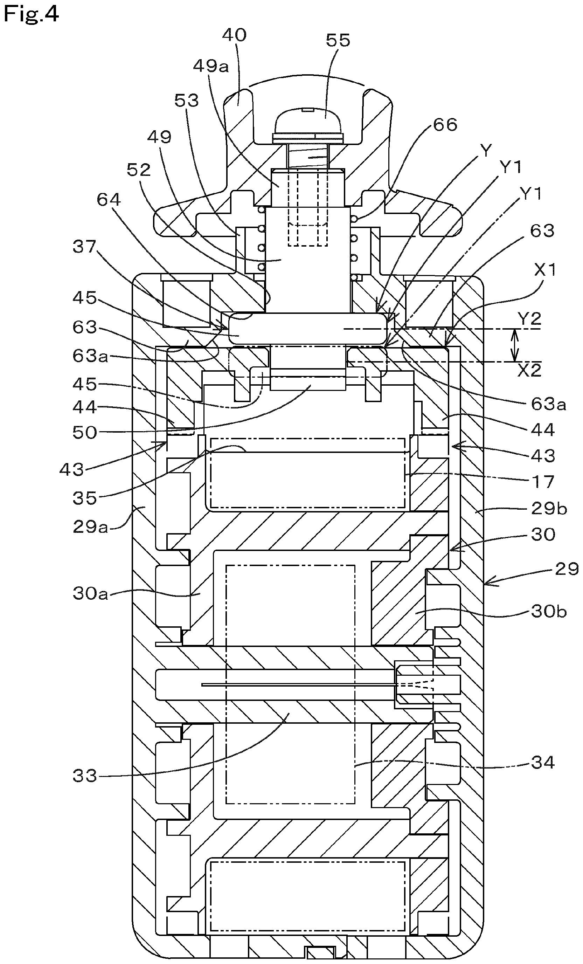

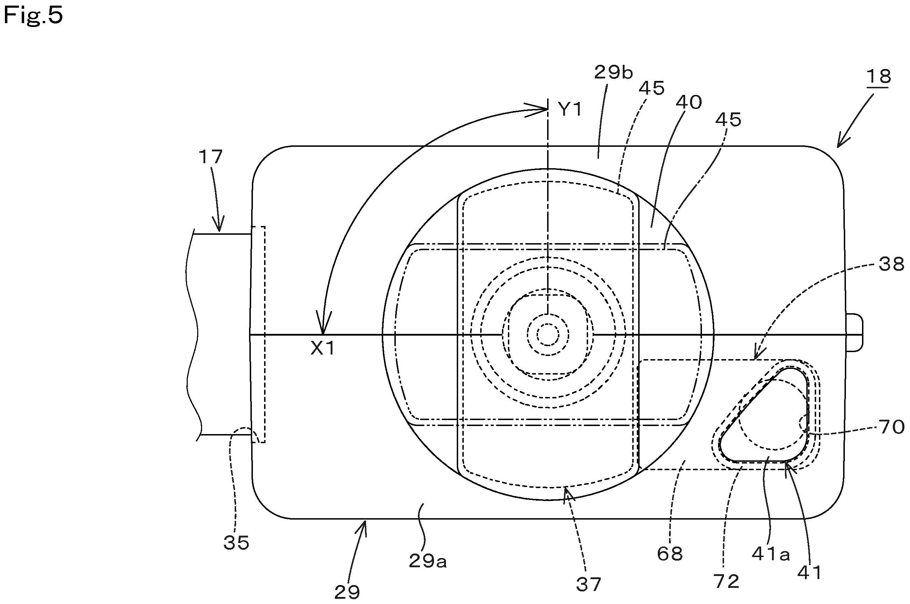

In FIGs. 1 to 5, the seatbelt reel-in device 18 comprises a reel-in case 29 and a reel-in rotating body 30 for freely reeling and unreeling the seatbelt 17. The reel-in case 29 is composed of right and left case bodies 29a and 29b, taken as a pair, fastened to each other via a fastening tool 31 such as nut-and-bolt means . The reel-in rotating body 30 is composed of a combination of horizontally arranged gear drum 30a and gear plate 30b fastened to each other via a fastening tool 32 such as nut-and-bolt means. The reel-in rotating body 30 is housed for free rotation about a lateral axis 33 within the reel-in case 29, and is rotatably urged in a direction to reel the seatbelt 17 by a reel-in spring 34 housed within the reel-in case 29 (the reel-in rotating body 30).

A taking-out opening 35 is formed in the upper part of the rear side of the reel-in case 29, so that the seatbelt 17 set in a wound condition within the reel-in case 29 can be reeled off through the taking-out opening 35 and run rearwardly of the reel-in case 29.

A rotation lock mechanism 37 for disabling the rotation of the reel-in rotating body 30, and an inhibiting mechanism 38 for inhibiting the rotation lock mechanism 37 from switching to an unlocking state are disposed within the reel-in case 29. As will hereafter be described, the rotation lock mechanism 37 can be switched back and forth between a locking state for disabling the rotation of the reel-in rotating body 30 and an unlocking state for permitting the rotation of the reel-in rotating body 30, and, the inhibitingmechanism 38 can be switched back and forth between an inhibiting state for inhibiting the rotation lock mechanism 37 from switching to the unlocking state and a permitting state for allowing the rotation lock mechanism 37 to switch to the unlocking state.

A lock operation tool 40 for switching the rotation lock mechanism 37 back and forth between the locking state and the unlocking state is disposed externally of the reel-in case 29, and, an inhibition operation tool 41 for switching the inhibiting mechanism 38 back and forth between the inhibiting state and the permitting state is disposed so as to project outward from within the reel-in case 29.

The rotation lock mechanism 37 comprises a pair of right and left lock gears 43 mounted in the reel-in rotating body 30, a pair of right and left lock pawls 44 that releasably engage with the corresponding lock gears 43, and a lock member 45 for locking the lock pawl 44 in engagement with the lock gear 43. A pawl constituting member 47 including the paired right and left lock pawls 44 is held for free movement toward the lock gear 43 within the reel-in case 29, and, the rotation lock mechanism 37 is designed to disable the rotation of the reel-in rotating body 30 under the engagement of the lock pawl 44 with the lock gear 43.

The lock pawl 44 is constituted by two integral engagement projections that are fitted in meshing engagement in corresponding interdental spacings in continuous three teeth of the lock gear 43.

The lock operation tool 40 is placed on the outer-surface side of the upper wall of the reel-in case 29. The lock member 45 shaped in a rectangular thick-walled plate has, at its midportion, an upwardly-projecting cylindrical support shaft 49 and a downwardly-projecting engagement protrusion 50. The support shaft 49, with a rectangular tube-shaped fit portion 49a disposed at the upper end thereof, is inserted for free vertical movement and for free rotational movement about the support shaft 49 into a support tube 53 having a through hole 52 formed in the upper wall of the reel-in case 29, is fitted to the lower-surface side of the lock operation tool 40 via the fit portion 49a, and is fastened by a fastening tool 55 such as a bolt.

Thus, the lock member 45 is rotatable about the support shaft 49, and is movable toward and away from the lock gear 43 in a vertical direction, and also, within the reel-in case 29, the lock member 45 is supported so as to be rotatable about the support shaft 49 to assume a locking attitude X1 where its lengthwise direction is aligned with the horizontal direction and an unlocking attitude Y1 where the lengthwise direction is aligned with a front-rear direction, and is supported so as to be movable up and down to assume an approaching position X2 to move close to the lock gear 43 and a separating position Y2 to move away from the lock gear 43.

Moreover, the lock operation tool 40 is coupled to the lock member 45 for operation of the lock member 45 to enable the lock member 45 to rotationally move into the locking attitude X1 and the unlocking attitude Y1, as well as to move into the approaching position X2 and the separating position Y2. Accordingly, the lock member 45 can be switched back and forth between a locking state X and an unlocking state Y, which will hereafter be described, by the lock operation tool 40.

The engagement protrusion 50 is inserted in the midportion of the pawl constituting member 47 for free relative axial rotation while being securely retained in engagement therewith. Thus, the lock pawl 44 (the pawl constituting member 47) is situated between the lock member 45 and the lock gear 43, and is coupled to the lock member 45 so as to move toward and away from the lock gear 43 in sync with the lock member 45.

A pair of right and left retaining portions 63 is formed in the reel-in case 29, and, the retaining portions 63 are positioned one on either side of the lock member 45 in the horizontal direction. Aholding recess 64 formed in the reel-in case 29 is situated between the paired retaining portions 63. When the lock member 45 is moved to the approaching position X2 and is rotationally moved into the locking attitude X1 (set in the locking state X), then each lengthwise end of the lock member 45 engages with the retaining portion 63 from beneath, thus retaining the lock member 45 in the approaching position X2 for restraint against movement toward the separating position Y2.

Moreover, when the lock member 45 is rotationally moved into the unlocking attitude Y1 for movement to the separating position Y2 (set in the unlocking state Y), then the lock member 45 is fitted in engagement in the holding recess 64, thus holding the lock member 45 in the unlocking attitude Y1 for restraint against rotational movement into the locking attitude X1.

Thus, the lock member 45 is supported so as to be freely switched back and forth between the locking state X for locking the lock pawl 44 in engagement with the lock gear 43 and the unlocking state Y for moving the lock pawl 44 away from the lock gear 43 within the reel-in case 29. With this structure, the lock member 45 is set in the locking state X when rotationally moved into the locking attitude X1 at the approaching position X2, and is set in the unlocking state Y when moved to the separating position Y2 in the unlocking attitude Y1.

Moreover, once set in the locking state X, the lock member 45 is rotationally moved into the locking attitude X1 and moved to the approaching position X2. The lock member 45 in the locking state X, while being able to rotationally move into the locking attitude X1, is restrained against movement toward the separating position Y2.

Moreover, once set in the unlocking state Y, the lock member 45 is rotationally moved into the unlocking attitude Y1 and moved to the separating position Y2. The lock member 45 in the unlocking state Y, while being able to move to the approaching position X2, is restrained against rotational movement into the locking attitude X1.

To switch the lock member 45 from the unlocking state Y to the locking state X, it is necessary to move the lock member 45 in the unlocking state Y downward so as to reach the approaching position X2, and subsequently rotationally move the lock member 45 to change its attitude to the locking attitude X1. Moreover, to switch the lock member 45 from the locking state X to the unlocking state Y, it is necessary to rotationally move the lock member 45 in the locking state X to change its attitude to the unlocking attitude Y1, and subsequently move the lock member 45 upward so as to reach the separating position Y2.

The horizontally inward end of each of the right and left retaining portions 63 is gradually inclined outwardly and downwardly in the horizontal direction to define an inclined surface 63a. With this structure, in switching the lock member 45 from the unlocking state Y to the locking state X, the lock member 45 slides along the inclined surface 63a when rotationally moved, while being pressed downward, by the lock operation tool 40, wherefore the lock member 45 can be changed smoothly from the unlocking state Y to the locking state X.

A lock release spring 66 is disposed between the reel-in case 29 and the lock operation tool 40. The lock release spring 66 is fitted to the outer side of the support shaft 49 so as to lie between the upper wall of the reel-in case 29 and the lock operation tool 40, for urging the lock member 45 in a direction away from the lock gear 43 via the lock operation tool 40.

The inhibiting mechanism 38 has an inhibiting member 68 for inhibiting the lock member 45 from switching from the locking state X to the unlocking state Y. The inhibiting member 68, which is shaped in a rectangular thick-walled plate, is placed in a horizontal position at a lateral part of the interior of the reel-in case 29 in the vicinity of the lock member 45.

The inhibition operation tool 41, which is shaped in a triangular prism, is disposed so as to project upward from the inhibiting member 68. The inhibition operation tool 41 is inserted into a triangular insertion hole 70 formed in the upper wall of the reel-in case 29 so as to project upward through the insertion hole 70. Components including the inhibition operation tool 41 and the inhibiting member 68 are supported for free up-and-down movement on the upper wall of the reel-in case 29.

An annular stopper 72 is protrudingly disposed at the outer periphery of a vertically intermediate part of the inhibition operation tool 41. The abutting of the annular stopper 72 on the upper wall of the reel-in case 29 restrains upward movement of the components including the inhibition operation tool 41 and the inhibiting member 68. At this time, the inhibitingmember 68 is flush with the lock member 45 in the locking state X (assumes an inhibiting position A) . Accordingly, the inhibiting member 68 in the inhibiting position A is brought into correspondence with the lock member 45 in the locking state X, thus inhibiting the lock member 45 from changing its attitude from the locking attitude X1 to the unlocking attitude Y1.

Moreover, the upper part of the inhibition operation tool 41 projecting upward beyond the upper wall of the reel-in case 29 constitutes a pushbutton 41a. By pushbutton 41a-pressing operation, the inhibiting member 68 is moved downward (toward a permitting position B) from the inhibiting position A. Consequently, the inhibiting member 68 in the permitting position B stays away from the lock member 45 in the locking state X, thus allowing the lock member 45 to rotationally move to change its attitude from the locking attitude X1 to the unlocking attitude Y1.

Thus, the inhibiting member 68 is supported so as to be movable between the inhibiting position A to inhibit the lock member 45 from switching to the unlocking state Y and the permitting position B to allow the lock member 45 to switch to the unlocking state Y within the reel-in case 29.

A spring rest 75 is protrudingly disposed below the inhibiting member 68 of the reel-in case 29, and, an inhibiting spring 77 is placed between the spring rest 75 and the inhibiting member 68. The inhibiting spring 77 urges the inhibiting member 68 toward the inhibiting position A (in the upward direction) . Thus, the inhibition operation tool 41 is designed to enable the inhibiting member 68 to move from the inhibiting position A to the permitting position B against the urgence of the inhibiting spring 77 by button-pressing operation.

Under normal conditions, the inhibiting member 68 stays in the inhibiting position A under the urgence of the inhibiting spring 77, thus inhibiting the lock member 45 in the locking state X from switching to the unlocking state Y. By moving the inhibiting member 68 to the permitting position B against the urgence of the inhibiting spring 77 through inhibition operation tool 41-pressing operation, the lock member 45 in the locking state X can be switched to the unlocking state Y.

Following the completion of movement of the inhibiting member 68 to the permitting position B, the lock member 45 in the locking state X is rotationally moved to change its attitude from the locking attitude X1 to the unlocking attitude Y1 by the lock operation tool 40. Then, the lock member 45 is moved to the separating position Y2 and held in the holding recess 64 under the urgence of the lock release spring 66, whereupon components including the lock pawl 44 and the pawl constituting member 47 are withdrawn upward from the lock gear 43, thus bringing the lock member 45 into the unlocking state Y. Consequently, the rotation lock mechanism 37 is switched to the unlocking state through the release of the lock on the rotation lock mechanism 37, whereupon the reel-in rotating body 30 is automatically rotated in the seatbelt reel-in direction under the urgence of the reel-in spring 34.

According to the embodiment thus far described, in the case of unreeling the seatbelt 17 set in a wound condition within the seatbelt reel-in device 18 when the rotation lock mechanism 37 stays in the locking state, the inhibiting member 68 is moved from the inhibiting position A to the permitting position B by the operation of pressing the pushbutton 41a of the inhibition operation tool 41, and subsequently, the lock member 45 in the locking state X is rotationally moved to change its attitude from the locking attitude X1 to the unlocking attitude Y1 by lock operation tool 40-rotating operation. After that, upon releasing the lock operation tool 40, the lock member 45 is moved upward from the approaching position X2 toward the separating position Y2 so as to be held in the holding recess 64 under the urgence of the lock release spring 66, thus bringing the lock member 45 into the unlocking state Y. Consequently, the components including the lock pawl 44 and the pawl constituting member 47 are withdrawn upward from the lock gear 43, thus releasing the lock on the rotation lock mechanism 37, whereupon the rotation lock mechanism 37 is switched to the unlocking state.

The last step is to just pull the seatbelt 17 backward. In this way, the seatbelt 17 can be reeled off from the seatbelt reel-in device 18 with ease.

Moreover, in the case of reeling the seatbelt 17 which has been reeled off from the seatbelt reel-in device 18 when the rotation lock mechanism 37 stays in the locking state, likewise, the inhibiting member 68 is moved from the inhibiting position A to the permitting position B by the operation of pressing the pushbutton 41a of the inhibition operation tool 41, and subsequently the lock member 45 in the locking state X is rotationally moved to change its attitude to the unlocking attitude Y1 by lock operation tool 40-rotating operation. Thereby, the reel-in rotating body 30 is automatically rotated in the seatbelt reel-in direction under the urgence of the reel-in spring 34, whereupon the seatbelt 17 can be reeled in the seatbelt reel-in device 18 with ease.

Moreover, the seatbelt 17 can be set on child's body with ease simply by following a step of unreeling the seatbelt 17 from the seatbelt reel-in device 18 after the child sits in the child seat and a step of coupling the connecting tools 22 of the two branchlike belt bodies 20 to the corresponding connected tools 25 of the headrest 8.

After the setting of the seatbelt, the rotation lock mechanism 37 needs to be switched to the locking state X to prevent the seatbelt 17 from being reeled off to an unnecessarily large extent. To achieve this, the lock operation tool 40 in the unlocking state Y is rotationally moved, while being pressed downward, for sliding movement of the lock member 45 along the inclined surface 63a, whereupon the lock member 45 is moved downward so as to reach the approaching position X2. Then, the lock member 45 is rotationally moved to change its attitude to the locking attitude X1, and is thus switched smoothly from the unlocking state Y to the locking state X. Moreover, each lengthwise end of the lock member 45 engages with the retaining portion 63 from beneath, thus restraining the lock member 45 against movement toward the separating position Y2 (in the approaching position X2). Consequently, the pawl constituting member 47 is locked at the lock gear 43, with the lock pawl 44 kept in engagement with the lock gear 43, thus disabling the unreeling operation of the seatbelt 17.

At this time, by releasing the pressure applied to the lock operation tool 40, the inhibiting member 68 is moved to the inhibiting position A under the urgence of the inhibiting spring 77, thus inhibiting the lock member 45 from switching to the unlocking state Y. That is, the rotation lock mechanism 37 cannot be switched to the unlocking state by lock operation tool 40-rotating operation. This makes it possible to avoid that the lock operation tool 40 is inadvertently operated to switch the rotation lock mechanism 37 to the unlocking state by some mischief of a child sitting in the child seat, and thereby prevent the seatbelt 17 worn by the child from being accidentally reeled off from the reel-in rotating body 30 more reliably.

Moreover, in the present embodiment, under normal circumstances, the inhibiting member 68 can be moved to the inhibiting position A under the urgence of the inhibiting spring 77. Accordingly, the lock member 45 is inhibited from switching from the locking state X to the unlocking state Y without fail by the inhibiting member 68. This makes it possible to avoid that the lock operation tool 40 is inadvertently operated to switch the rotation lock mechanism 37 to the unlocking state by some mischief of a child sitting in the child seat more reliably. In addition, the lock member 45 can be switched to the unlocking state Y simply by manipulating the lock operation tool 40 with inhibition operation tool 41-pressing operation. That is, the rotation lock mechanism 37 can be switched to the unlocking state relatively easily.

Moreover, the inhibiting member 68 can be automatically returned to the inhibiting position A under the urgence of the inhibiting spring 77 simply by returning the lock member 45 to the locking state X. Quite conveniently, this makes it possible to eliminate the need to return the inhibiting member 68 to the inhibiting position A by manual operation, as well as to carry out operation without concern that the inhibiting member 68 may be inadvertently left unreturned to the inhibiting position A.

Although, in the aforestated embodiment, the seatbelt reel-in device 18 pursuant to the present invention is set in the child seat for bicycle 1 attached to a bicycle, the seatbelt reel-in device 18 may be set in a child seat attached to an automobile seat instead.

Moreover, although, in the aforestated embodiment, the rotation lock mechanism 37 comprises the lock gears 43 mounted in the reel-in rotating body 30, the lock pawls 44 that releasably engage with the corresponding lock gears 43 to disable the rotation of the reel-in rotating body 30, and the lock member 45 for locking the lock pawl 44 in engagement with the lock gear 43, the structure of the rotation lock mechanism 37 is not so limited. For example, the rotation lock mechanism 37 may be provided with a brake shoe which is brought into pressure-contact with the reel-in rotating body 30 for free movement toward and away from the reel-in rotating body 30. Inthiscase, the rotation lock mechanism 37 may be designed to switch back and forth between a locking state for locking the brake shoe into pressure-contact with the reel-in rotating body 30 and an unlocking state for moving the brake shoe away from the reel-in rotating body 30.

Moreover, although, in the aforestated embodiment, there is provided the inhibiting spring 77 for urging the inhibiting member 68 toward the inhibiting position A, the inhibiting spring 77 maybe omitted. Inthiscase, the inhibiting member 68 may be designed to switch back and forth between the inhibiting position A to inhibit the lock member 45 from switching to the unlocking state Y and the permitting position B to allow the lock member 45 to switch to the unlocking state Y, as well as to be securely held in each position, by rotationally moving operation or reciprocating operation.

### Explanation of reference symbols

- 17: seatbelt
- 18: seatbelt reel-in device
- 19: base belt body
- 20: branchlike belt body
- 29: reel-in case
- 30: reel-in rotating body
- 34: reel-in spring
- 37: rotation lock mechanism
- 38: inhibiting mechanism
- 40: lock operation tool
- 41: inhibition operation tool
- 41a: pushbutton
- 43: lock gear
- 44: lock pawl
- 45: lock member
- 47: pawl constituting member
- 63: retaining portion
- 64: holding recess
- 66: lock release spring
- 68: inhibiting member
- 77: inhibiting spring
- X1: locking attitude
- Y1: unlocking attitude
- X2: approaching position
- Y2: separating position
- X: locking state
- Y: unlocking state
- A: inhibiting position
- B: permitting position

## Claims

1. A seatbelt reel-in device comprising:
a reel-in rotating body (30) for freely reeling and unreeling a seatbelt (17) for restraining a small child sitting in a child seat, the reel-in rotating body (30) being urged in a direction to reel the seatbelt (17) by a reel-in spring (34) ;
a rotation lock mechanism (37) for disabling rotation of the reel-in rotating body (30), the rotation lock mechanism (37) being capable of switching back and forth between a locking state for disabling rotation of the reel-in rotating body (30) and an unlocking state for permitting rotation of the reel-in rotating body (30), the rotation lock mechanism (37) comprises a lock gear (43) mounted in the reel-in rotating body (30), a lock pawl (44) which releasably engages with the lock gear (43) to disable rotation of the reel-in rotating body (30), and a lock member (45) for locking the lock pawl (44) in engagement with the lock gear (43), the lock member (45) being free to switch back and forth between a locking state (X) for locking the lock pawl (44) in engagement with the lock gear (43) and an unlocking state (Y) for separating the lock pawl (44) from the lock gear (43) ;
a lock operation tool (40) for switching the rotation lock mechanism (37) back and forth between the locking state and the unlocking state;
an inhibiting mechanism (38) having an inhibiting member (68) for inhibiting the lock member (45) of the rotation lock mechanism (37) from switching from the locking state to the unlocking state, the inhibiting member (68) of the inhibiting mechanism (38) being supported so as to be moveably switching back and forth between an inhibiting position to inhibit the lock member (45) of the rotation lock mechanism (37) from switching to the unlocking state and a permitting position to allow the lock member (45) of the rotation lock mechanism (37) to switch to the unlocking state; and
wherein an inhibiting spring (77) is provided to urge the inhibiting member (68) toward the inhibiting position; and
an inhibition operation tool (41) for switching the inhibiting mechanism (38) back and forth between the inhibiting state and the permitting state; wherein
the inhibiting member (68) can be automatically returned to the inhibiting position under the urgence of the inhibiting spring (77) by returning the lock member (45) to the locking state (A).

2. The seatbelt reel-in device according to claim 1,
wherein the inhibition operation tool (41) is designed to cause the inhibiting member (68) to move to the permitting position (B) against an urgence of the inhibiting spring (77) by button-pressing operation.

3. The seatbelt reel-in device according to claim 2,
wherein said lock member (45) is rotatably supported to assume a locking attitude (X1) and an unlocking attitude (Y1), and is movably supported to assume an approaching position (X2) to move close to the lock gear (43) and a separating position (Y2) to move away from the lock gear (43),
and wherein the lock member (45) is set in said locking state (X) when rotationally moved into the locking attitude (X1) at the approaching position (X2), and is set in said unlocking state (Y) when moved to the separating position (Y2) in the unlocking attitude (Y1).

4. The seatbelt reel-in device according to claim 3, further comprising:
retaining portions (63), taken as a pair, positioned one on either side of the lock member (45), which engage with corresponding lengthwise ends of the lock member (45) to restrain the lock member (45) from moving toward the separating position (Y2) when the lock member (45) is set in the locking state (X) ; and
a holding recess (64) situatedbetween the paired retaining portions (63), for holding the lock member (45) therein to restrain the lock member (45) from rotationally moving into the locking attitude (X1) when the lock member (45) is set in the unlocking state (Y).

5. The seatbelt reel-in device according to claim 4,
wherein the inhibitingmember (68) is placed in the vicinity of the lock member (45),
and wherein the inhibiting member (68) in the inhibiting position (A) is brought into correspondence with the lock member (45) in the locking state (X), thus inhibiting the lock member (45) from rotationally moving to change its attitude from the locking attitude (X1) to the unlocking attitude (Y1), and, the inhibiting member (68) in the permitting position (B) stays away from the lock member (45) in the locking state (X), thus allowing the lock member (45) to rotationally move to change its attitude from the locking attitude (X1) to the unlocking attitude (Y1).

6. The seatbelt reel-in device according to any one of claims 3 to 5,
wherein the lock pawl (44), which is situated between the lock member (45) and the lock gear (43), is coupled to the lock member (45) so as to move toward and away from the lock gear (43) in sync with the lock member (45),
and wherein the lock operation tool (40) is coupled to the lock member (45) for operation of the lock member (45) to enable the lock member (45) to rotationally move into the locking attitude (X1) and the unlocking attitude (Y1), as well as to move into the approaching position (X2) and the separating position (Y2).

7. The seatbelt reel-in device according to any one of claims 3 to 5, further comprising:
a lock release spring (66) for urging the lock member (45) in a direction away from the lock gear (43).

8. The seatbelt reel-in device according to claim 4 or claim 5, further comprising:
a reel-in case (29) in which the reel-in rotating body (30) is rotatably accommodated, and a pawl constituting member (47) including said lock pawl (44) is held for free movement toward the lock gear (43), the reel-in case (29) being formed with said paired retaining portions (63) and said holding recess (64).

9. The seatbelt reel-in device according to claim 8,
wherein the lock operation tool (40) is placed on an outer-surface side of the reel-in case (29),
wherein the inhibition operation tool (41) is disposed so as to project from the inhibiting member (68), and is inserted in the reel-in case (29) in an outwardly-projecting condition so as for the inhibiting member (68) to be movable between the inhibiting position (A) and the permitting position (B),
and wherein an outwardly-projecting part of the inhibition operation tool (41) constitutes a pushbutton (41a).

10. The seatbelt reel-in device according to any one of claims 1 to 5,
wherein said seatbelt (17) has a single base belt body (19) at its base end which is wound on the reel-in rotating body (30), and two branchlike belt bodies (20) branched from the base belt body (19) at its front end.

## Patentansprüche

1. Sicherheitsgurt-Aufrollvorrichtung, umfassend:
einen drehbaren Aufrollkörper (30) zum freien Aufrollen und Entrollen eines Sicherheitsgurtes (17) zum Rückhalten eines kleinen Kindes, das in einem Kindersitz sitzt, wobei der drehbare Aufrollkörper (30) durch eine Aufrollfeder (34) in einer Richtung zum Aufrollen des Sicherheitsgurtes (17) vorgespannt wird;
einen Drehsperrmechanismus (37) zum Verhindern einer Drehung des drehbaren Aufrollkörpers (30), wobei der Drehsperrmechanismus (37) dazu fähig ist, zwischen einem gesperrten Zustand zum Verhindern einer Drehung des drehbaren Aufrollkörpers (30) und einem entsperrten Zustand zum Zulassen einer Drehung des drehbaren Aufrollkörpers (30) hin und her geschaltet zu werden, der Drehsperrmechanismus (37) ein Sperrrad (43) umfasst, das in dem drehbaren Aufrollkörper (30) montiert ist, eine Sperrklinke (44), die lösbar mit dem Sperrrad (43) in Eingriff kommt, um eine Drehung des drehbaren Aufrollkörpers (30) zu verhindern, und ein Sperrelement (45) zum Sperren der Sperrklinke (44) im Eingriff mit dem Sperrrad (43), wobei das Sperrelement (45) zwischen einem Sperrzustand (X) zum Sperren der Sperrklinke (44) im Eingriff mit dem Sperrrad (43) und einem Entsperrungszustand (Y) zum Trennen der Sperrklinke (44) von dem Sperrrad (43) frei hin und her geschaltet werden kann;
ein Sperrbetätigungswerkzeug (40) zum Hin-und-her-Schalten des Drehsperrmechanismus (37) zwischen dem Sperrzustand und dem Entsperrungszustand;
einen Hemmungsmechanismus (38), der ein Hemmungselement (68) hat, um ein Schalten des Sperrelements (45) des Drehsperrmechanismus (37) von dem Sperrzustand in den Entsperrungszustand zu hemmen, wobei das Hemmungselement (68) des Hemmungsmechanismus (38) so gelagert ist, dass es zwischen einer Hemmungsposition zum Hemmen eines Schaltens des Sperrelements (45) des Drehsperrmechanismus (37) in den Entsperrungszustand, und einer Zulassungsposition, um es dem Sperrelement (45) des Drehsperrmechanismus (37) zu erlauben, in den Entsperrungszustand zu schalten, beweglich hin und her schaltbar ist; und
wobei eine Hemmungsfeder (77) vorgesehen ist, um das Hemmungselement (68) zu der Hemmungsposition hin zu drücken; und
ein Hemmungsbetätigungswerkzeug (41) zum Hin-und-her-Schalten des Hemmungsmechanismus (38) zwischen dem Hemmungszustand und dem Zulassungszustand; wobei
durch Zurückführen des Sperrelements (45) in den Sperrzustand (A) das Hemmungselement (68) unter dem Druck der Hemmungsfeder (77) automatisch in die Hemmungsposition zurückgeführt werden kann.

2. Sicherheitsgurt-Aufrollvorrichtung gemäß Anspruch 1,
wobei das Hemmungsbetätigungswerkzeug (41) dazu konstruiert ist zu verursachen, dass sich das Hemmungselement (68) durch einen Knopfdruckvorgang gegen einen Druck der Hemmungsfeder (77) in die Zulassungsposition (B) bewegt.

3. Sicherheitsgurt-Aufrollvorrichtung gemäß Anspruch 2,
wobei das Sperrelement (45) drehbar gelagert ist, um eine Sperrhaltung (X1) und eine Entsperrungshaltung (Y1) einzunehmen, und beweglich gelagert ist, um eine Annäherungsposition (X2), um sich nahe zu dem Sperrrad (43) zu bewegen, und eine Trennungsposition (Y2) einzunehmen, um sich von dem Sperrrad (43) weg zu bewegen,
und wobei das Sperrelement (45) in den Sperrzustand (X) versetzt wird, wenn es drehend in die Sperrhaltung (X1) in der Annäherungsposition (X2) bewegt wird, und in den Entsperrungszustand (Y) versetzt wird, wenn es in die Trennungsposition (Y2) in der Entsperrungshaltung (Y1) bewegt wird.

4. Sicherheitsgurt-Aufrollvorrichtung gemäß Anspruch 3, ferner umfassend:
Rückhalteteile (63), die als ein Paar genommen eines jeweils auf einer Seite des Sperrelements (45) angeordnet sind, die mit entsprechenden Längsenden des Sperrelements (45) in Eingriff kommen, um das Sperrelement (45) daran zu hindern, sich zur Trennungsposition (Y2) hin zu bewegen, wenn das Sperrelement (45) in den Sperrzustand (X) versetzt ist; und
eine Halteausnehmung (64), die zwischen dem Paar Rückhalteteilen (63) angeordnet ist, um das Sperrelement (45) darin zu halten, um das Sperrelement (45) daran zu hindern, sich drehend in die Sperrhaltung (X1) zu bewegen, wenn das Sperrelement (45) in den Entsperrungszustand (Y) versetzt ist.

5. Sicherheitsgurt-Aufrollvorrichtung gemäß Anspruch 4,
wobei das Hemmungselement (68) in der Nachbarschaft des Sperrelements (45) angeordnet ist,
und wobei das Hemmungselement (68) in der Hemmungsposition (A) in Entsprechung zu dem Sperrelement (45) in den Sperrzustand (X) gebracht wird, um so eine drehende Bewegung des Sperrelements (45) zum Ändern seiner Haltung von der Sperrhaltung (X1) zur Entsperrungshaltung (Y1) zu hemmen, und das Hemmungselement (68) in der Zulassungsposition (B) von dem Sperrelement (45) in dem Sperrzustand (X) entfernt bleibt, wodurch zugelassen wird, dass das Sperrelement (45) sich drehend bewegt, um seine Haltung von der Sperrhaltung (X1) zur Entsperrungshaltung (Y1) zu ändern.

6. Sicherheitsgurt-Aufrollvorrichtung gemäß einem der Ansprüche 3 bis 5,
wobei die Sperrklinke (44), die zwischen dem Sperrelement (45) und dem Sperrrad (43) angeordnet ist, mit dem Sperrelement (45) gekoppelt ist, um sich so synchron mit dem Sperrelement zu dem Sperrrad (43) hin und von diesem weg zu bewegen,
und wobei das Sperrbetätigungswerkzeug (40) mit dem Sperrelement (45) zur Betätigung des Sperrelements (45) gekoppelt ist, um es dem Sperrelement (45) zu ermöglichen, sich drehend in die Sperrhaltung (X1) und die Entsperrungshaltung (Y1) zu bewegen sowie sich in die Näherungsposition (X2) und die Trennungsposition (Y2) zu bewegen.

7. Sicherheitsgurt-Aufrollvorrichtung gemäß einem der Ansprüche 3 bis 5, ferner umfassend:
eine Sperr-Lösungs-Feder (66) zum Drücken des Sperrelements (45) in eine Richtung weg von dem Sperrrad (43).

8. Sicherheitsgurt-Aufrollvorrichtung gemäß Anspruch 4 oder Anspruch 5, ferner umfassend:
ein Aufrollgehäuse (29), in dem der drehbare Aufrollkörper (30) drehbar untergebracht ist, und ein die Sperrklinke darstellendes Element (47), das die Sperrklinke (44) enthält, für eine freie Bewegung hin zu dem Sperrrad (43) gehalten wird, wobei das Aufrollgehäuse (29) von dem Paar Rückhalteteilen (63) und der Halteausnehmung (64) ausgebildet wird.

9. Sicherheitsgurt-Aufrollvorrichtung gemäß Anspruch 8,
wobei das Sperrbetätigungswerkzeug (40) auf einer Außenoberfläche des Aufrollgehäuses (29) angeordnet ist,
wobei das Hemmungsbetätigungswerkzeug (41) so angeordnet ist, dass es von dem Hemmungselement (68) vorsteht, und in dem Aufrollgehäuse (29) in einem nach außen vorstehenden Zustand eingesetzt ist, damit das Hemmungselement (68) zwischen der Hemmungsposition (A) und der Zulassungsposition (B) beweglich ist,
und wobei ein nach außen vorstehender Teil des Hemmungsbetätigungswerkzeugs (41) einen Druckknopf (41a) darstellt.

10. Sicherheitsgurt-Aufrollvorrichtung gemäß einem der Ansprüche 1 bis 5,
wobei der Sicherheitsgurt (17) einen einzigen Basisgurtkörper (19) an seinem Basisende, der auf den drehbaren Aufrollkörper (30) gewickelt wird, und zwei zweigartige Gurtkörper (20) hat, die von dem Basisgurtkörper (19) an seinem vorderen Ende abzweigen.

## Revendications

1. Dispositif d'enroulement de ceinture de sécurité comprenant :
un corps rotatif d'enroulement (30) destiné à enrouler et dérouler librement une ceinture de sécurité (17) afin de retenir un enfant de petite taille assis dans un siège pour enfant, le corps rotatif d'enroulement (30) étant poussé dans un sens pour enrouler la ceinture de sécurité (17) par un ressort d'enroulement (34) ;
un mécanisme de blocage de rotation (37) destiné à empêcher la rotation du corps rotatif d'enroulement (30), le mécanisme de blocage de rotation (37) étant en mesure de basculer en va-et-vient entre un état de blocage destiné à empêcher la rotation du corps rotatif d'enroulement (30) et un état de déblocage destiné à permettre la rotation du corps rotatif d'enroulement (30), le mécanisme de blocage de rotation (37) comprend un engrenage de blocage (43) monté dans le corps rotatif d'enroulement (30), une mâchoire de blocage (44) laquelle s'engage de manière libérable avec l'engrenage de blocage (43) pour empêcher la rotation du corps rotatif d'enroulement (30), et un élément de blocage (45) destiné à bloquer la mâchoire de blocage (44) en engagement avec l'engrenage de blocage (43), l'élément de blocage (45) étant libre de basculer en va-et-vient entre un état de blocage (X) afin de bloquer la mâchoire de blocage (44) en engagement avec l'engrenage de blocage (43) et un état de déblocage (Y) afin de séparer la mâchoire de blocage (44) de l'engrenage de blocage (43) ;
un outil d'actionnement de blocage (40) destiné à faire basculer le mécanisme de blocage de rotation (37) en va-et-vient entre l'état de blocage et l'état de déblocage ;
un mécanisme d'inhibition (38) présentant un élément d'inhibition (68) destiné à interdire à l'élément de blocage (45) du mécanisme de blocage de rotation (37) de basculer de l'état de blocage à l'état de déblocage, l'élément d'inhibition (68) du mécanisme d'inhibition (38) étant supporté de sorte à être basculé de manière mobile en va-et-vient entre une position d'inhibition permettant d'interdire à l'élément de blocage (45) du mécanisme de blocage de rotation (37) de basculer vers l'état de déblocage et une position d'autorisation permettant à l'élément de blocage (45) du mécanisme de blocage de rotation (37) de pouvoir basculer vers l'état de déblocage ; et
où un ressort d'inhibition (77) est prévu pour pousser l'élément d'inhibition (68) vers la position d'inhibition ; et
un outil d'actionnement d'inhibition (41) destiné à faire basculer le mécanisme d'inhibition (38) en va-et-vient entre l'état d'inhibition et l'état d'autorisation ; où
l'élément d'inhibition (68) peut être automatiquement ramené à la position d'inhibition sous l'action de la poussée du ressort d'inhibition (77) en ramenant l'élément de blocage (45) à l'état de blocage (A).

2. Dispositif d'enroulement de ceinture de sécurité selon la revendication 1,
dans lequel l'outil d'actionnement d'inhibition (41) est conçu pour amener l'élément d'inhibition (68) à se déplacer vers la position d'autorisation (B) à l'encontre d'une poussée du ressort d'inhibition (77) par actionnement d'un bouton-poussoir.

3. Dispositif d'enroulement de ceinture de sécurité selon la revendication 2,
dans lequel ledit élément de blocage (45) est supporté avec possibilité de rotation pour adopter une disposition de blocage (X1) et une disposition de déblocage (Y1), et est supporté avec possibilité de déplacement pour adopter une position d'approche (X2) pour se rapprocher de l'engrenage de blocage (43) et une position de séparation (Y2) pour s'écarter de l'engrenage de blocage (43),
et où l'élément de blocage (45) est placé dans ledit état de blocage (X) lorsqu'il est déplacé de manière rotative dans la disposition de blocage (X1) à la position d'approche (X2), et est placé dans ledit état de déblocage (Y) lorsqu'il est déplacé à la position de séparation (Y2) dans la disposition de déblocage (Y1).

4. Dispositif d'enroulement de ceinture de sécurité selon la revendication 3, comprenant en outre :
des parties de retenue (63), considérées comme une paire, positionnées une de chaque côté de l'élément de blocage (45), lesquelles s'engagent avec des extrémités longitudinales correspondantes de l'élément de blocage (45) pour empêcher l'élément de blocage (45) de se déplacer vers la position de séparation (Y2) lorsque l'élément de blocage (45) est placé dans l'état de blocage (X) ; et
un évidement de maintien (64) situé entre les parties de retenue appariées (63), destiné à maintenir l'élément de blocage (45) en son sein pour empêcher l'élément de blocage (45) de se déplacer de manière rotative à la disposition de blocage (X1) lorsque l'élément de blocage (45) est placé dans l'état de déblocage (Y).

5. Dispositif d'enroulement de ceinture de sécurité selon la revendication 4,
dans lequel l'élément d'inhibition (68) est placé à proximité de l'élément de blocage (45),
et où l'élément d'inhibition (68) dans la position d'inhibition (A) est amené en correspondance avec l'élément de blocage (45) dans l'état de blocage (X), interdisant ainsi à l'élément de blocage (45) de se déplacer de manière rotative afin de changer sa disposition pour passer de la disposition de blocage (X1) à la disposition de déblocage (Y1), et, l'élément d'inhibition (68) dans la position d'autorisation (B) demeure à l'écart de l'élément de blocage (45) dans l'état de blocage (X), autorisant ainsi l'élément de blocage (45) à se déplacer de manière rotative afin de changer sa disposition pour passer de la disposition de blocage (X1) à la disposition de déblocage (Y1).

6. Dispositif d'enroulement de ceinture de sécurité selon l'une quelconque des revendications 3 à 5,
dans lequel la mâchoire de blocage (44), laquelle est située entre l'élément de blocage (45) et l'engrenage de blocage (43), est couplée à l'élément de blocage (45) de sorte à se déplacer en direction et vers l'opposé de l'engrenage de blocage (43) en synchronisation avec l'élément de blocage (45),
et où l'outil d'actionnement de blocage (40) est couplé à l'élément de blocage (45) pour l'actionnement de l'élément de blocage (45) afin de permettre à l'élément de blocage (45) de se déplacer de manière rotative à la disposition de blocage (X1) et à la disposition de déblocage (Y1), et de se déplacer à la position d'approche (X2) et à la position de séparation (Y2).

7. Dispositif d'enroulement de ceinture de sécurité selon l'une quelconque des revendications 3 à 5, comprenant en outre :
un ressort de libération de blocage (66) destiné à pousser l'élément de blocage (45) dans un sens à l'opposé de l'engrenage de blocage (43).

8. Dispositif d'enroulement de ceinture de sécurité selon la revendication 4 ou la revendication 5, comprenant en outre :
un boîtier d'enroulement (29) dans lequel le corps rotatif d'enroulement (30) est reçu avec possibilité de rotation, et un élément constitutif de mâchoire (47) incluant ladite mâchoire de blocage (44) est maintenu pour un libre déplacement vers l'engrenage de blocage (43), le boîtier d'enroulement (29) étant formé avec lesdites parties de retenue appariées (63) et ledit évidement de maintien (64).

9. Dispositif d'enroulement de ceinture de sécurité selon la revendication 8,
dans lequel l'outil d'actionnement de blocage (40) est placé sur un côté de surface extérieur du boîtier d'enroulement (29),
où l'outil d'actionnement d'inhibition (41) est disposé de sorte à être en saillie par rapport à l'élément d'inhibition (68), et est inséré dans le boîtier d'enroulement (29) dans un état de saillie vers l'extérieur de sorte à ce que l'élément d'inhibition (68) puisse se déplacer entre la position d'inhibition (A) et la position d'autorisation (B),
et où une partie faisant saillie vers l'extérieur de l'outil d'actionnement d'inhibition (41) constitue un bouton-poussoir (41a).

10. Dispositif d'enroulement de ceinture de sécurité selon l'une quelconque des revendications 1 à 5,
dans lequel ladite ceinture de sécurité (17) présente un seul corps de ceinture de base (19) au niveau de son extrémité de base lequel est enroulé sur le corps rotatif d'enroulement (30), et deux corps de ceinture de ramification (20) se ramifiant depuis le corps de ceinture de base (19) au niveau de son extrémité avant.
